# EUROPÄISCHE PATENTANMELDUNG

(11) **EP 4 660 496 A1**
(43) Veröffentlichungstag der Anmeldung: **10.12.2025**
(21) Anmeldenummer: 24180089.5
(22) Anmeldetag: 05.06.2024
(51) Int. Cl.: F16K 15/03, E03F 7/04, F16K 27/02

(54) **SELBSTTÄTIGE RÜCKSCHLAGKLAPPE, FUNKTIONSROHR UND ROHRLEITUNG**

(71) Anmelder: Beck, Klaus, 64546 Mörfelden-Walldorf (DE)
(72) Erfinder: BECK, Markus, 64546 Mörfelden-Walldorf (DE); ABT, Roland, Eschborn (DE)
(74) Vertreter: Keil & Schaafhausen Patentanwälte PartGmbB

(57) **Zusammenfassung**

Die vorliegende Erfindung betrifft eine selbsttätige Rückschlagklappe (100) für die Verwendung in einer horizontalen Rohrleitung (1). Die selbsttätige Rückschlagklappe (100) weist zwei Klappenblätter (101) auf, die sich jeweils in eine Längsrichtung (LK) und eine Querrichtung (QK) erstrecken und dazu eingerichtet sind, um eine gemeinsame Rotationsachse (102) verschwenkt zu werden. Insbesondere damit die selbsttätige Rückschlagklappe in einer horizontalen Rohrleitung verbaut und ohne Betätigungselement rückgestellt werden kann, weist ferner ein jedes Klappenblatt (101) der selbsttätigen Rückschlagklappe einen Masseschwerpunkt auf, der in Längsrichtung (LK) von einer Mittelachse (m), die durch einen Mittelpunkt (M) einer maximalen Längserstreckung senkrecht zur Längsrichtung (LK) verläuft, verschoben angeordnet ist.

## Beschreibung

Die vorliegende Erfindung betrifft eine selbsttätige Rückschlagklappe für die Verwendung in einer horizontalen Rohrleitung. Ferner betrifft die vorliegende Erfindung ein Funktionsrohr aufweisend eine selbsttätigen Rückschlagklappe sowie eine Rohrleitung, die ein entsprechendes Funktionsrohr umfasst.

Rohrleitungen sind insbesondere aus Zu- und Abluftanlagen bekannt, die in der chemischen Industrie dazu verwendet werden, beispielsweise Abluft einem Reinigungsverfahren zuzuführen. Um die Abluft durch die Rohrleitung zu fördern, werden häufig Ventilatoren eingesetzt. Ferner ist es bekannt, Rückschlagklappen in den Rohrleitungen zu verwenden, um beispielsweise eine Rückströmung der Abluft zumindest zu reduzieren, welche bei abgeschaltetem Ventilator vor allem durch Konvektion hervorgerufen wird. Um diese Aufgabe zu erfüllen, ist es in der Regel nicht erforderlich und oftmals nicht gewünscht, dass die Rückschlagklappen eine Dichtfunktion übernehmen oder, wie dies beispielsweise bei Drosselklappen der Fall ist, dass die Rückschlagklappen den Fluidstrom gezielt einstellen.

Darüber hinaus ist es bekannt, das durch die Rohrleitung strömende Medium zum Öffnen der Rückschlagklappe zu verwenden. Regelmäßig werden hierzu, wie beispielsweise in DE 33 29 279 A1 gezeigt, Rückschlagklappen mit einem Betätigungselement, beispielsweise einer Feder, versehen, um die Rückschlagklappe von einer geöffneten Stellung in eine geschlossene Stellung zu überführen, beispielsweise wenn der Fluidstrom aufgrund einer Abschaltung des Ventilators nachlässt. Durch die Verwendung von Betätigungselementen entstehen jedoch erhöhte Kosten in der Herstellung. Zudem ist der Aufbau derartiger Rückschlagklappen deutlich komplexer und die oftmals verwendeten metallischen Betätigungselemente, beispielsweise die Federn, sind mit den aggressiven Medien der chemischen Industrie nicht vereinbar, da sie korrodieren. Aufgrund der Verwendung von Betätigungselementen sind teilweise zudem deutlich größere Fluidströme bzw. Drücke erforderlich, um die Rückschlagklappen vollständig zu öffnen.

Aus einigen dieser Gründe wird, insbesondere in der chemischen Industrie, regelmäßig auf Rückschlagklappen zurückgegriffen, die allein durch die Schwerkraft betätigt werden. Allerdings sind derartige Rückschlagklappen ohne Betätigungselement bisher nur für vertikale Rohrleitungen bekannt. Eine durch die Schwerkraft rückstellbare Rückschlagklappe wird beispielsweise in EP 1 962 017 A2 gezeigt. Rückschlagklappen, die den Verzicht auf ein Betätigungselement erlauben, sind zwar häufig deutlich wartungsärmer, erfordern aber das Vorhandensein vertikaler Rohrleitungsabschnitte und insbesondere großer Fluidströme, da das gesamte Gewicht der Rückschlagklappe entgegen der Schwerkraftrichtung bewegt werden muss. Da es zudem beim Nachrüsten von Rohrleitungen, die keine oder nur schwer zugängliche vertikale Rohrleitungsabschnitte aufweisen häufig zu Schwierigkeiten kommt, besteht der Bedarf an einer alternativen Rückschlagklappe, die insbesondere in horizontalen Rohrleitungen montieret werden kann. Die Montage in horizontalen Rohrleitungen ist gegenüber der Montage in vertikalen Rohrleitungen deutlich einfacherer und birgt geringerer arbeitssicherheitstechnische Risiken.

Aufgabe der vorliegenden Erfindung ist es daher eine Rückschlagklappe bereitzustellen, die in einer horizontalen Rohrleitung verbaut werden kann, und kein Betätigungselement für die Rückstellung erfordert. Ferner besteht die Aufgabe der vorliegenden Erfindung darin eine hinsichtlich der Montage und Fertigung einfache und damit kostengünstige Rückschlagklappe zu schaffen, welche wartungswarm und anwenderfreundlich ist. Des Weiteren besteht die Aufgabe der vorliegenden Erfindung darin eine Rückschlagklappe bereitzustellen, die bereits bei geringen Fluidströmen öffnet, den Fluidstrom nur geringfügig beeinflusst und einen geringen Einbauraum erfordert.

Die Aufgabe der vorliegenden Erfindung wird mit den Merkmalen einer selbsttätigen Rückschlagklappe nach Anspruch 1 gelöst. Ferner wird die vorliegende Erfindung durch ein Funktionsrohr nach Anspruch 7 mit einer entsprechenden selbsttätigen Rückschlagklappe sowie mit einer Rohrleitung umfassend ein entsprechendes Funktionsrohr gelöst.

Die erfindungsgemäße selbsttätige Rückschlagklappe ist für die Verwendung in einer horizontalen Rohrleitung geeignet. Mit anderen Worten wird bei einer Verwendung der erfindungsgemäßen Rückschlagklappe aufgrund dessen, dass die Rückschlagklappe selbsttätig ist, auch in einer horizontalen Rohrleitung kein Betätigungselement, wie beispielsweise eine Feder oder ein pneumatisches oder elektrisches Betätigungselement, benötigt.

In der Einbaulage ist der Masseschwerpunkt der Klappenblätter in Richtung der Schwerkraft nach unten verschoben, so dass die Klappenblätter bei ausbleibendem oder nur geringem Volumenstrom in der Rohrleitung selbsttätig um ihre Achse schwenken (nach unten klappen) und die Rohrleitung verschließen. Wird der Volumenstrom in der Rohrleitung wieder größer, so verschwenken die Klappenblätter um ihre Achse und öffnen die Leitung.

Der Begriff "horizontal" wird in der Beschreibung synonym zu dem Begriff "waagerecht" verwendet und beschreibt insbesondere eine örtliche Lage, die in Bezug auf eine örtliche Schwerkraftrichtung rechtwinklig verläuft. Beispielsweise wird eine Rohrleitung im Sinne der Erfindung dann als horizontal angesehen, wenn eine Längsachse der Rohrleitung in einem rechten Winkel zur Schwerkraftrichtung orientiert ist.

Vorzugsweise wird die selbsttätige Rückschlagklappe in der chemischen Industrie eingesetzt. Die selbsttätige Rückschlagklappe weist ferner zwei Klappenblätter auf. Jedes Klappenblatt erstreckt sich dabei in eine Längsrichtung und in eine Querrichtung. Darüber hinaus sind die Klappenblätter dazu eingerichtet, sich um eine gemeinsame Rotationsachse zu verschwenken bzw. um eine gemeinsame Rotationsachse verschwenkt zu werden. Das heißt, dass die Klappenblätter beispielsweise um die Rotationsachse als Bezugsachse rotieren können, wobei die Klappenblätter über Befestigungselemente an der Rotationsachse gehalten werden. Die für die Rotation erforderliche Kraft kann beispielsweise durch eine Fluidströmung aufgebracht werden.

Die Längsrichtung eines jeden Klappenblattes verläuft vorzugsweise parallel zur Rotationsachse, wobei die Querrichtung senkrecht zur Längsrichtung verläuft. Der Begriff "Klappenblatt" wird im Sinne der Anmeldung als das ein Rohr, Funktionsrohr, eine Rohrleitung oder ein Rohrabschnitt verschließende Klappenelement verstanden. Ein Verschließen durch das Klappenelement bedeutet nicht zwangsläufig, dass kein Fluid von einem Bereich vor dem Klappenelement in einen Bereich, der in Fluidstromrichtung hinter dem Klappenelement liegt, strömen kann. Wie Eingangs bereits erwähnt, wird von den Klappenelementen regelmäßig keine Dichtfunktion erfordert. Darüber hinaus ist die Rückschlagklappe nicht zur gezielten Einstellung von Volumenströmen eingerichtet, wie dies bei Drosselklappen der Fall ist.

Ferner wird darauf hingewiesen, dass wenngleich das Klappenblatt mit Befestigungselementen zur Befestigung an einer Rotationsachse ausgebildet sein kann, werden diese Befestigungselemente dem Klappenblatt nicht zugerechnet, sofern dies nicht ausdrücklich beschrieben wird. Folglich sind die Klappenblätter der selbsttätigen Rückschlagklappe vorzugsweise spiegelsymmetrisch in Bezug auf eine durch die Rotationsachse und eine in Längsrichtung einer Rohrleitung verlaufende Ebene, wenngleich die Klappenblätter unterschiedlich angeordnete Befestigungselemente zur Befestigung an einer Rotationsachse aufweisen können.

Ein jedes Klappenblatt weist aufgrund der zuvor erwähnten Erstreckung in Längsrichtung eine maximale Längserstreckung und aufgrund der zuvor erwähnten Erstreckung in Querrichtung eine maximale Quererstreckung auf. Ferner weist jedes Klappenblatt einen Masseschwerpunkt auf, wobei der Masseschwerpunkt in Längsrichtung von einer Mittelachse, die durch einen Mittelpunkt der maximalen Längserstreckung des Klappenblattes senkrecht zur Längsrichtung verläuft, verschoben angeordnet ist. Mit anderen Worten liegt der Massenschwerpunkt eines jeden Klappenblattes der selbsttätigen Rückschlagklappe nicht auf einer Mittelachse, die in Bezug auf eine absolute (maximale) Längserstreckung des Klappenblattes mittig angeordnet und in Querrichtung orientiert ist, sondern der Masseschwerpunkt ist von einer derartigen Achse in Längsrichtung verschoben. Eine Mittelachse, die in eine Querrichtung des Klappenblatts orientiert ist und durch einen Mittelpunkt der maximalen Längserstreckung des Klappenblatts verläuft, definiert somit die Mitte des Klappenblatts. Folglich weist das Klappenblatt keine symmetrische Form auf.

Die Verschiebung des Massenschwerpunktes und die damit einhergehende nicht symmetrische Bauform eines einzelnen Klappenblattes ermöglicht, dass die Klappenblätter der selbsttätigen Rückschlagklappe in Schräglage in Bezug auf eine Fluidströmungsrichtung in einem Rohr verbaut werden können. Beim Einbau der Klappenblätter in Schräglage ergibt sich somit ein zu verschließender Rohrquerschnitt in Ellipsenform. Folglich kann die für eine Verschließung des Rohrquerschnitts durch Rückstellung der Klappenblätter ohne Betätigungselement erforderliche Rückstellkraft durch die Schwerkraft aufgebracht werden. Somit werden weder für die Überführung in eine geöffnete Stellung noch für die Überführung in eine geschlossene Stellung zusätzliche Betätigungselemente benötigt, wodurch eine kostengünstige und wartungsarme selbsttätige Rückschlagklappe bereitgestellt wird, die zur Verwendung in einer horizontalen Rohrleitung geeignet ist.

In einer Ausführungsform weist ein jedes Klappenblatt der selbsttätigen Rückschlagklappe eine zumindest bereichsweise konvex gekrümmte Anströmungsfläche auf. Die Anströmungsfläche definiert dabei eine Fläche der Klappenblätter, die in einer geschlossenen Stellung der Rückschlagklappe auf einer dem Fluidstrom zugewandten Seite der Klappenblätter angeordnet ist. Die Anströmungsfläche ist dabei insbesondere, die Fläche, auf die der Fluidstrom trifft, um die Klappenblätter zu öffnen. Die konvexe Form der Anströmungsfläche ermöglicht dabei zum einen, dass die Klappenblätter in einer geschlossenen Stellung bereichsweise mit einer Klappenblattfläche und nicht unmittelbar mit einer Außenkante des Klappenblatts an einer Rohrinnenfläche anliegen. Folglich kommt es beispielsweise bei Änderungen der Materialausdehnung, beispielsweise aufgrund von Temperaturänderungen, nicht zu einem Verkanten zwischen Außenkanten der Klappenblätter und Rohrinnenflächen. Ferner optimiert die konvexe Form der Anströmungsflächen ein Strömungsverhalten des Fluidstroms, wodurch es bei einer Öffnung der Klappenblätter insbesondere zu weniger Verwirbelungen im Fluidstrom kommt. In anderen Worten kann eine Beeinflussung des Fluidstroms durch die Rückschlagklappe minimiert werden. Des Weiteren kann die konvexe Form dazu beitragen, dass ein Rohrquerschnitt zumindest nahezu verschlossen wird, wobei gleichzeitig größere Fertigungstoleranzen erlaubt werden. Darüber hinaus ermöglicht die konvexe Form der Klappenblätter mehr Material bei einer gleichzeitig geringen Klappenblattdicke in einem Bereich des Klappenblattes bereitzustellen, wodurch die durch das Eigengewicht des Klappenplattes erzeugte Schwerkraft, insbesondere in ausgewählten Bereichen, vergrößert werden kann und infolgedessen die Rückstellung optimiert werden kann. Vorzugsweise weisen die Klappenblätter dabei eine Einbaulage auf, d.h., eine Lage, in der die Klappenblätter in eine Rohrleitung eingesetzt werden sollen, bei der die das Klappenblatt insbesondere unterhalb einer Längsachse einer Rohrleitung eine konvexe Form aufweist.

Vorzugsweise beträgt eine maximale Dicke eines Klappenblatt weniger als 12 mm, insbesondere zwischen 1.5 mm und 12 mm. Die Klappenblattdicke kann dabei zwischen einer Dicke in einem Bereich der Rotationsachse und einem Bereich an der Außenkante variieren. Eine Dicke der Klappenblätter im Bereich der Au-ßenkante beträgt vorzugsweise zwischen 1.5 mm und 5 mm. Zudem weist ein einzelnes Klappenblatt vorzugsweise ein Gewicht von weniger als 520 g, beispielsweise von zwischen 50 g und 500 g. Bezogen auf eine Rohrleitung mit einem Innendurchmesser von 200 mm beträgt das Gewicht einer aus PPs hergestellten Rückschlagklappe inklusive Rotationsachse beispielsweise nur 120 g. Sämtliche zuvor und nachfolgend genannten Maße, sofern nicht anders beschrieben, werden hierbei im Sinne einer Allgemeintoleranz gemäß DIN ISO 2768-m verstanden.

In einer weiteren Ausführungsform sind die Klappenblätter dazu eingerichtet, durch eine auf die Anströmungsflächen der Klappenblätter wirkende Fluidströmung von einer geschlossenen Stellung in eine geöffnete Stellung überführt zu werden. Ferner sind die Klappenblätter dazu eingerichtet, aufgrund der Schwerkraft in der geschlossenen Stellung zu verharren, wenn keine Fluidströmung vorhanden ist. Folglich sind die Klappenblätter der selbsttätigen Rückschlagklappe dazu eingerichtet, allein durch die Fluidströmung und ohne Betätigungselement geöffnet bzw. betätigt zu werden. Ferner erfolgt die Rückstellung allein durch das Eigengewicht der Klappenblätter. Ein Betätigungselement, beispielsweise eine Feder, wird nicht benötigt, wodurch die selbsttätige Rückschlagklappe insbesondere bereits bei geringen Fluidströmen öffnet.

Nach einem weiteren Aspekt der Erfindung weist ein jedes Klappenblatt der selbsttätigen Rückschlagklappe eine Innenkante und eine Außenkante auf. Prinzipiell handelt es sich bei der Innenkante und der Außenkante um eine das Klappenblatt, beispielsweise die Anströmungsfläche des Klappenblattes, umlaufende Kante. Die Innenkante ist dazu eingerichtet, hin zu einer Rotationsachse zu weisen und die Außenkante ist dazu eingerichtet, in einer geschlossenen Stellung der selbsttätigen Rückschlagklappe zumindest bereichsweise hin zu einer Rohrinnenfläche zu weisen. Ferner ist die Außenkante eines Klappenblatts bereichsweise ellipsenförmig und bereichsweise oval ausgestaltet. Nach einem Aspekt ändert sich folglich ein Krümmungsradius der Außenkante des Klappenblattes entlang einer Erstreckung der Außenkante, d.h. von einem ersten Punkt, an dem die Außenkante auf die Innenkante trifft, hin zu einem zweiten Punkt, an dem die Außenkante auf die Innenkante trifft. Nach einem Aspekt können die Klappenblätter eine Tropfenform aufweisen, wobei ein Klappenblatt eine halbe Tropfenform aufweist. Nach einem Aspekt kann ein jedes Klappenblatt, beispielsweise die Anströmungsfläche des Klappenblatts, bereichsweise die Form einer Mantelfläche eines Kegels bilden. Bei einer bevorzugten Einbaulage, bei der die Rotationsachse in Bezug auf eine senkrechte Richtung senkrecht zur Fluidströmungsrichtung schräggestellt wird, sind die Klappenblätter derart angeordnet, dass eine Fluidströmung auf den bereichsweisen ellipsenförmigen Abschnitt des Klappenblattes trifft, bevor die Fluidströmung den bereichsweisen kegelförmigen Abschnitt des Klappenblattes erreicht. Weitere Aspekte in Bezug auf die Einbaulage werden an späterer Stelle beschrieben. Aufgrund der beschriebenen Ausgestaltung der Klappenblätter, insbesondere unter Hinzuziehung einer konvexen Form, ist es möglich, dass der bereichsweise kegelförmige Abschnitt einen gegenüber dem bereichsweisen ellipsenförmigen Abschnitt vergrößertes Volumen bildet bzw. aufweist und folglich ein größeres Gewicht hat. Vorzugsweise ist der Masseschwerpunkt daher in den kegelförmigen Abschnitt des Klappenblattes verschoben. Aufgrund der beschriebenen Form der Klappenblätter sind diese ferner hinsichtlich eines möglichen Druckverlustes optimiert und werden damit ihrem Verwendungszweck als reine Rückschlagklappe bestmöglich gerecht.

Ferner können die Klappenblätter aus einem Kunststoff, vorzugsweise aus PVC, PVC-UV, PP, PE, PVDF, PPs oder PPs-el, ausgebildet sein. Die Ausbildung der Klappenblätter aus einem Kunststoff sorgt insbesondere für ein geringes Eigengewicht der Klappenblätter, sodass ein Ansprechverhalten der Rückschlagklappe, d.h., der für die Öffnung erforderliche Fluidstrom, gering sein kann. Gleichzeitig ist die Herstellung der Klappenblätter aus Kunststoff vergleichsweise kostengünstig und flexibel mit Blick auf die Formgestaltung. Ferner eignen sich die benannten Kunststoffarten für den Einsatz in der chemischen Industrie und sind beispielsweise schwer entflammbar und/oder beständig gegenüber aggressiven Medien. Folglich kann die Auswahl eines entsprechenden Kunststoffes zusätzlich den Wartungsaufwand der Rückschlagklappe minimieren und die Rückschlagklappe für den Einsatz in einer chemischen Abluftanlagen einrichten.

In einer weiteren Ausführungsform weisen die Klappenblätter der selbsttätigen Rückschlagklappe jeweils Befestigungselemente auf, die dazu eingerichtet sind, gemeinsam mit einer Rotationsachse ein Scharnier zu bilden. Vorzugsweise handelt es sich bei dem Scharnier um ein einfaches Scharnier, bei dem die Befestigungselemente einstückig mit den Klappenblättern ausgebildet sind. Ähnlich einem gerollten Scharnier sind dabei die Befestigungselemente der Klappenblätter derart ausgestaltet, dass die Rotationsachse durch die Befestigungselemente der Klappenblätter geschoben werden kann und gemeinsam das Scharnier bildet. Vorzugsweise weist jedes Klappenblatt mindestens zwei Befestigungselemente auf, wobei die Befestigungselemente der beiden Klappenblätter entlang der Rotationsachse versetzt angeordnet sind. Hierdurch kann insbesondere die Stabilität der Verbindung zwischen Klappenblatt und Rotationsachse optimiert werden. Der einfache Aufbau eines derartigen Scharniers erleichtert zudem die Montage und ist wenig verschleißanfällig. Darüber hinaus kann durch das Scharnier ein weitgehend dichtes Gelenk geschaffen werden, welches beispielsweise nur kleine Schlitzöffnungen aufweist, sodass ein, beispielsweise durch Konvektion hervorgerufener, Fluidrückstrom mit Hilfe der Rückschlagklappe zumindest weitestgehend blockiert wird. Vorzugsweise sind die Befestigungselemente der Klappenblätter verstärkt auf der Anströmungsflächen abgewandten Seite der Klappenblätter ausgeprägt, wodurch trotz des Scharniers eine gleichmäßige Anströmungsfläche geschaffen wird.

Ferner wird die Aufgabe der vorliegenden Erfindung durch ein Funktionsrohr nach Anspruch 7 gelöst. Das Funktionsrohr weist wenigstens eine Rotationsachse und wenigstens eine selbsttätige Rückschlagklappe gemäß den Merkmalen der vorangegangenen Beschreibung auf. Die Anzahl der Rückschlagklappen entspricht dabei der Anzahl an Rotationsachsen. Ein Funktionsrohr könnte daher auch mehrere Rückschlagklappen aufweisen. Vorzugsweise weist jedoch ein Funktionsrohr nur eine Rückschlagklappe und damit nur eine Rotationsachse auf. Das Funktionsrohr erstreckt sich entlang einer Funktionsrohrlängsrichtung. Die Funktionsrohrlängsrichtung kann bei einer im Wesentlichen laminaren Fluidströmung im Wesentlichen der Richtung der Fluidströmungsrichtung entsprechen. Ferner ist die Funktionsrohrlängsrichtung senkrecht zu einer Radialrichtung des Funktionsrohres. Das Funktionsrohr bildet dabei vorzugsweise einen Hohlzylinder.

Darüber hinaus weist das Funktionsrohr wenigstens zwei an einer Rohrinnenfläche des Funktionsrohres, d.h. einer Mantelinnenfläche des Funktionsrohres, gegenüberliegend und in Funktionsrohrlängsrichtung versetzt angeordnete Aufnahmemittel auf. Wären die Aufnahmemittel, die beispielsweise Ausnehmungen oder Bohrungen sein können, lediglich gegenüberliegend angeordnet, so wären die Aufnahmemittel in Radialrichtung auf einer gleichen Achse angeordnet. Eine Rotationsachse, die in auf diese Weise angeordnete Aufnahmemittel aufgenommen wäre, würde folglich senkrecht zur Funktionsrohrlängsrichtung verlaufen. Da die Aufnahmemittel vorliegend allerdings nicht bloß gegenüberliegend, sondern gleichzeitig auch in Funktionsrohrlängsrichtung versetzt angeordnet sind, verläuft eine in diese Aufnahmemittel aufgenommene Rotationsachse schräg bzw. geneigt. In anderen Worten weist somit die Rotationsachse vorliegend einen von einem rechten Winkel verschiedenen Winkel gegenüber der Funktionsrohrlängsrichtung auf. Folglich ist die Rotationsachse, die in den Aufnahmemitteln formschlüssig gehalten wird, schräg bzw. geneigt orientiert, und wird ohne zusätzliche Hilfsmittel in dem Funktionsrohr gehalten. Die Montage des Funktionsrohres kann folglich ohne weiteres Werkzeug erfolgen.

Wenngleich die Rotationsachse und damit die Rückschlagklappe auch direkt in eine Rohrleitung integriert werden könnte, wird ein Funktionsrohr für die Aufnahme der Rückschlagklappe bevorzugt, da hierdurch eine Montage am Einsatzort, insbesondere das Nachrüsten einer bereits existierenden horizontalen Rohrleitung vereinfacht wird.

Insbesondere wenn die Orientierung der Aufnahmemittel derart gewählt wird, dass ein Aufnahmemittel an einem oberen (höchsten) und ein Aufnahmemittel an einem unteren (niedrigsten) Punkt des Funktionsrohres angeordnet ist, wenn das Funktionsrohr im Wesentlichen horizontal verläuft, können die Klappenblätter der Rückschlagklappe folglich allein durch die Schwerkraft in die geschlossene Stellung überführt werden. Mit anderen Worten liegen die Aufnahmemittel bei einer derartigen Orientierung auf gegenüberliegenden Scheitelpunkten einer Kreisfunktion in Bezug auf eine Koordinatenachse, die einer Radialrichtung des Rohres entspricht, die parallel zur Schwerkraftrichtung verläuft, und sind zusätzlich in Funktionsrohrlängsrichtung versetzt. Das Funktionsrohr ermöglicht daher auf einfache Weise und ohne zusätzliche Hilfsmittel eine Montage der Rückschlagklappe in einem Funktionsrohr. Ferner sind die in das Funktionsrohr aufgenommenen Klappenblätter dazu eingerichtet, allein durch ihr Eigengewicht zu schließen. Das Funktionsrohr ermöglicht somit, die Rückstellung der Rückschlagklappe, ohne dafür Betätigungsmittel verwenden zu müssen.

In einer Ausführungsform ist die Rotationsachse gegenüber einer Radialrichtung des Funktionsrohres, die senkrecht zur Funktionsrohrlängsrichtung verläuft, um einen Neigungswinkel von zwischen 8° und 20° geneigt. In anderen Worten ist die Rotationsachse um einen Neigungswinkel von zwischen 8° und 20° ausgelenkt bzw. schräg gestellt. Bevorzugt verläuft die Radialrichtung, gegenüber der die Rotationsachse geneigt ist, parallel zur Schwerkraftrichtung. Vorzugsweise beträgt der Neigungswinkel 15°. Der vergleichsweise geringe Neigungswinkel reduziert den Platzbedarf für die Rückschlagklappe in dem Funktionsrohr. Gleichzeitig ermöglicht der geringe Neigungswinkel insbesondere in Kombination mit der Verlagerung des Masseschwerpunktes eine ausreichende Rückstellkraft. Vorzugsweise ist das Funktionsrohr dabei, wie zuvor beschrieben, orientiert, wobei der Masseschwerpunkt vorzugsweise in eine Richtung näher an den unteren (niedrigsten) Punkt des Funktionsrohres als an den oberen (höchsten) Punkt des Funktionsrohres verschoben ist. In anderen Worten befindet sich der Masseschwerpunkt vorzugsweise unterhalb einer Längsachse, die eine Symmetrieachse darstellen kann, in Bezug auf welche das Funktionsrohr in Form eines Hohlzylinders rotationsymmetrisch ausgestaltet sein kann.

In einer weiteren Ausführungsform, und wie bereits zuvor angedeutet, befindet sich die selbsttätige Rückschlagklappe in einer geschlossenen Stellung, wenn keine Fluidströmung in das Funktionsrohr strömt und wenn das Funktionsrohr im Wesentlichen horizontal orientiert ist, d.h., wenn die Funktionsrohrlängsrichtung des Funktionsrohres einen Winkel zwischen 82° und 98°, vorzugsweise einen Winkel von 90°, mit der Schwerkraftrichtung bildet. Abhängig von der Orientierung des Funktionsrohres kann es prinzipiell zwar auch möglich sein, dass die selbsttätige Rückschlagklappe bei einem anderen Winkel geschlossen gehalten wird, allerdings verschlechtert sich für diesen Fall das Ansprechverhalten der Rückschlagklappe signifikant. Folglich schafft die beschriebene Orientierung des Funktionsrohres eine selbsttätige Rückschlagklappe mit einem besonders guten Ansprechverhalten. D.h., dass nur ein geringer Fluidstrom erforderlich ist, um die selbsttätige Rückschlagklappe zu öffnen.

Ferner weist das Funktionsrohr in einer Ausführungsform an seiner Rohrinnenfläche, d.h., der Mantelinnenfläche des Funktionsrohes, ein in Funktionsrohrlängsrichtung zu einem der Aufnahmemittel versetzt angeordnetes Blockierelement auf. Das Blockierelment begrenzt dabei eine maximale Öffnung der Klappenblätter der selbsttätigen Rückschlagklappe. Wenn folglich ein Fluidstrom auf die Klappenblätter der selbsttätigen Rückschlagklappe trifft, öffnet dieser Fluidstrom die Rückschlagklappe, d.h., dass die Klappenblätter um die Rotationsachse, beispielsweise mit Hilfe der Scharniere, verschwenken. Da die Klappenblätter dabei in entgegengesetzte Rotationsrichtungen um die Rotationsachse verschwenken, würden die Klappenblätter bei plötzlich auftretenden gro-ßen Fluidströmen schlagartig gegeneinander stoßen. Hierdurch können Beschädigungen an den Klappenblättern auftreten. Darüber hinaus wäre es möglich, dass eines der Klappenblätter umschlägt oder die Klappenblätter sich verhaken und nicht in ihre geschlossene Stellung zurückkehren, wenn der Fluidstrom nachlässt bzw. unterbrochen wird. Das Blockierelement kann folglich insbesondere aus einem vergleichsweise weichen Material, beispielsweise aus einem Schaumstoff ausgebildet sein, wodurch die auftretenden Stöße abgefangen werden können. Das Blockierelement kann dazu beispielsweise an die Rohrinnenfläche aufgeklebt werden.

In einer weiteren Ausführungsform ist das Funktionsrohr dazu eingerichtet, in eine Rohrleitung mit einem Innendurchmesser von zwischen 75 mm und 400 mm eingesetzt zu werden. Folglich weist das Funktionsrohr einen gegenüber dem Innendurchmesser der Rohrleitung verringerten Durchmesser auf. Vorzugsweise entspricht dabei ein Außendurchmesser des Funktionsrohres im Wesentlichen dem Innendurchmesser der Rohrleitung. Vorzugsweise beträgt der Innendurchmesser der Rohrleitung 110 mm, 160 mm, 220 mm, 250 mm, 315 mm oder 355 mm. Nach einem Aspekt kann eine Wandstärke des Funktionsrohres und/oder eine Wandstärke der Rohrleitung zwischen 1 mm und 5 mm betragen. Vorzugsweise beträgt die Wandstärke 3 mm. Die Wandstärken des Funktionsrohres und der Rohrleitung können dabei gleich oder verschieden sein. Ein Funktionsrohr, welches derart in eine Rohrleitung eingesetzt wird, dass der Außendurchmesser des Funktionsrohres an dem Innendurchmesser der Rohrleitung anliegt, ermöglicht zudem eine leckagefreie Vereinigung von Funktionsrohr und Rohrleitung.

Nach einem weiteren Aspekt der Erfindung weist eine Länge des Funktionsrohres zu einem Außendurchmesser des Funktionsrohres ein Verhältnis von zwischen 0.3 zu 1 und 0.5 zu 1, vorzugsweise ein Verhältnis von 0.5 zu 1, auf. Bei einer Länge des Funktionsrohres von 100 mm beträgt der Außendurchmesser des Funktionsrohres bei einem bevorzugten Verhältnis von 0.5 zu 1 beispielsweise 200 mm. Folglich ist eine Einbaulänge des Funktionsrohres vergleichsweise kurz, wodurch sich die selbsttätige Rückschlagklappe und das Funktionsrohr insbesondere für den Einsatz in kleinen Bauräumen eignet.

Nach einem weiteren Aspekt können die Klappenblätter und/oder das Funktionsrohr Kennzeichnungen bezüglich einer Einbaurichtung und Einbaulage aufweisen, wodurch der Einbau der selbsttätigen Rückschlagklappe und/oder des Funktionsrohres vereinfacht wird und die Gefahr eines fehlerhaften Einbaus minimiert wird.

Des Weiteren wird die Aufgabe der vorliegenden Erfindung durch eine Rohrleitung gemäß Anspruch 13 gelöst. Die Rohrleitung kann insbesondere dem Einsatz in der chemischen Industrie dienen und weist ein erstes Rohrleitungsteilstück auf, welches beispielsweise von einem Ventilator kommend einen Fluidstrom leitet. Ferner weist die Rohrleitung ein zweites Rohrleitungsteilstück auf, welches beispielsweise zu einem Abluftauslass führt. Die Rohrleitung kann folglich Teil einer Anlage der chemischen Industrie sein. Die Rohrleitungsteilstücke stellen dabei vorzugsweise einen Abschnitt einer Rohrleitung dar, welche zumindest im Wesentlichen horizontal verläuft. Die Rohrleitungsteilstücke können entweder bereits als Rohrleitungsteilstücke gefertigt worden sein oder aber durch Auftrennen einer Rohrleitung gebildet werden.

Ferner weist die Rohrleitung ein Funktionsrohr mit den zuvor beschriebenen Aspekten und Merkmalen auf. Beispielsweise kann eine Rohrleitung für den nachträglichen Einsatz eines Funktionsrohres aufgetrennt werden oder aber bereits in Rohrleitungsteilstücken vorliegen, beispielsweise für einen erstmaligen Zusammenbau der Rohrleitung. Das Funktionsrohr der Rohrleitung wird dazu zumindest bereichsweise in das erste Rohrleitungsteilstück und das zweite Rohrleitungsteilstück eingesetzt, wobei eine Außenfläche des Funktionsrohres an einer ersten Mantelinnenfläche des ersten Rohrleitungsteilstücks und an einer zweiten Mantelinnenfläche des zweiten Rohrleitungsteilstücks anliegt. Das Funktionsrohr wird somit zumindest bereichsweise, vorzugsweise vollständig, von den Rohrleitungsteilstücken umschlossen, sodass ein geschlossenes Gehäuse gebildet wird. In anderen Worten liegen Stirnflächen der Rohrleitungsteilstücke vorzugsweise aneinander an. Alternativ sind die Stirnflächen voneinander beabstandet und bilden einen Spalt. Vorzugsweise beträgt der Abstand weniger als 5 mm. Nach einem Aspekt beträgt der Abstand bzw. der Spalt zwischen den Stirnflächen 1 mm. Hierdurch wird eine Rohrleitung geschaffen, die zum einen eine selbsttätige Rückschlagklappe aufweist, welche für die funktionsfähige Verwendung in einer horizontal angeordneten Rohrleitung eingerichtet ist. Darüber hinaus wird durch das geschlossene Gehäuse eine Rohrleitung gebildet, die trotz des Einsatzes des Funktionsrohres keine (bzw. keine nennenswerte) Leckage aufweist. Ferner wird kein Werkzeug benötigt, um das Funktionsrohr in die Rohrleitung einzusetzen oder bei Vorliegen von Rohrleitungsteilstücken zusammenzubauen.

In einer weiteren Ausführungsform weist das erste Rohrleitungsteilstück einen an der ersten Mantelinnenfläche angeordneten ersten Vorsprung auf. Zudem weist das zweite Rohrleitungsteilstück einen an der zweiten Mantelinnenfläche angeordneten zweiten Vorsprung auf. Das Funktionsrohr ist dabei durch den ersten Vorsprung und den zweiten Vorsprung an einer Längsverschiebung innerhalb der Rohrleitungsteilstücke in Funktionsrohrlängsrichtung gehindert. In anderen Worten ist das Funktionsrohr zwischen den Vorsprüngen eingeklemmt. Im Wesentlichen bilden die Rohrleitungsteilstücke damit jeweils einen Muffenanschluss. Die hierdurch gebildeten zusätzlichen Stoßflächen verbessern zusätzlich die Dichtheit der Rohrleitung. Gleichzeitig wird durch die Vorsprünge sichergestellt, dass das Funktionsrohr sich innerhalb der Rohrleitung nicht in Funktionsrohrlängsrichtung verschieben kann, beispielsweise beim Auftreten von großen Fluidströmen.

Zusätzlich können nach einer Ausführungsform das erste Rohrleitungsteilstück, das zweite Rohrleitungsteilstück, das Funktionsrohr, die Rotationsachse und die selbsttätige Rückschlagklappe spritzgeformt sein. Nach einem Aspekt können das erste Rohrleitungsteilstück, das zweite Rohrleitungsteilstück, das Funktionsrohr, die Rotationsachse sowie die selbsttätige Rückschlagklappe aus einem Kunststoff, vorzugsweise aus PVC, PVC-UV, PP, PE, PVDF, PPs oder PPs-el, ausgebildet sein. Dies ermöglicht eine kostengünstige Herstellung der entsprechenden Bauteile und ermöglicht zudem die Verwendung der Bauteile mit aggressiven Medien, wie sie in der chemischen Industrie vorkommen.

Nach einem Aspekt kann das die selbsttätige Rückschlagklappe aufweisende Funktionsrohr in einer im Wesentlichen horizontalen Rohrleitung verwendet werden. Eine im Wesentlichen horizontale Rohrleitung liegt dann vor, wenn die Funktionsrohrlängsrichtung oder eine Längsachse einer Rohrleitung gegenüber einer Waagerechten um nicht mehr als 8° geneigt ist. Nach einem Aspekt kann die Rohrleitung Teil einer Zu- oder Abluftanlage sein, beispielsweise Teil einer Zu- oder Abluftanlage der chemischen Industrie.

Nach einem weiteren Aspekt kann die selbsttätige Rückschlagklappe nicht nur als sogenannter Rohrleitungsfitting mit einem Funktionsrohr in eine Rohrleitung eingesetzt werden, sondern auch direkt in eine Rohrleitung eingebaut werden, wobei die zur Aufnahme der Rotationsachse benötigten Aufnahmemittel direkt in die Mantelinnenfläche der Rohrleitung eingebracht werden.

Die Erfindung wird nachfolgend anhand von Ausführungsbeispielen und den Figuren näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung

Es zeigen schematisch:
- Fig. 1: eine erfindungsgemäße Rohrleitung mit einem eingesetzten, erfindungsgemäßen Funktionsrohr und einer selbsttätigen Rückschlagklappe;
- Fig. 2: einen perspektivischen Längsschnitt der Rohrleitung gemäß Fig. 1;
- Fig. 3: eine Seitenansicht der in Fig. 2 gezeigten, geschnittenen Rohrleitung;
- Fig. 4: ein mit einer Rotationsachse verbundenes Klappenblatt einer selbsttätigen Rückschlagklappe gemäß der Erfindung;
- Fig. 5: eine fluidabstromseitige Teilansicht eines Scharniers, das durch eine Rotationsachse und zwei Klappenblätter gebildet wird;
- Fig. 6: eine fluidanstromseitige Teilansicht eines Scharniers, das durch eine Rotationsachse und zwei Klappenblätter gebildet wird; und
- Fig. 7: eine perspektivische Ansicht einer selbsttätigen Rückschlagklappe mit zwei mit einer Rotationsachse verbundenen Klappenblätter.

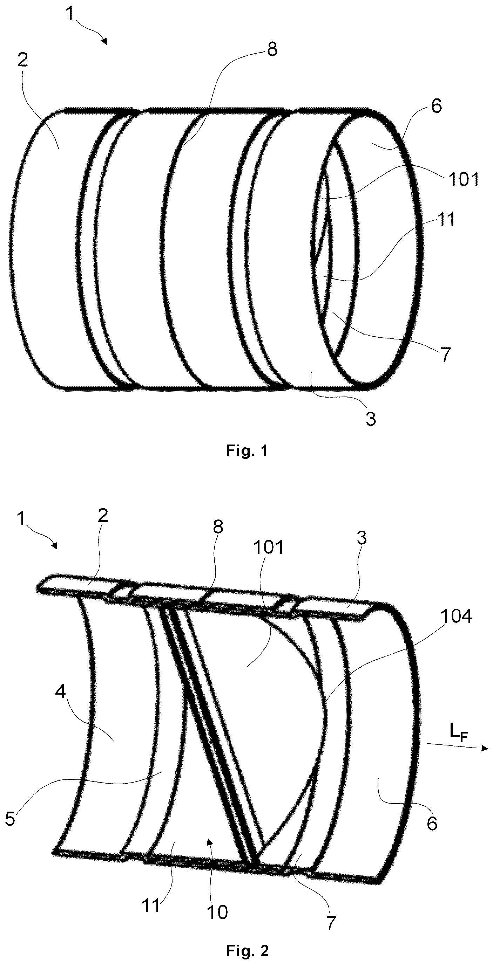

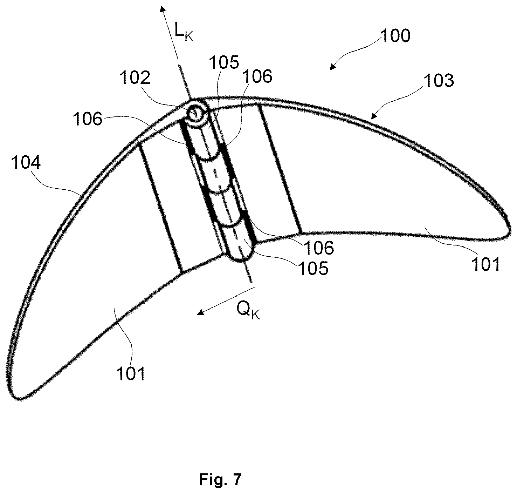

Nachfolgend werden in den Figuren 1 bis 7 gleiche Elemente, Bauteile und Einheiten, d. h. Elemente, Bauteile und Einheiten, die eine ähnliche Funktion erfüllen oder einem ähnlichen Zweck dienen, mit gleichen Bezugszeichen bezeichnet.

Figur 1 zeigt eine Rohrleitung 1 aufweisend ein erstes Rohrleitungsteilstück 2 und ein zweites Rohrleitungsteilstück 3. Das erste Rohrleitungsteilstück 2 und das zweite Rohrleitungsteilstück 3 sind über ein Funktionsrohr 10 miteinander verbunden. Wie aus Figur 2 besser ersichtlich, ist das Funktionsrohr 10 dabei zwischen einem an einer ersten Mantelinnenfläche 4 angeordneten ersten Vorsprung 5 und einem an einer zweiten Mantelinnenfläche 6 angeordneten zweiten Vorsprung 7 des zweiten Rohrleitungsteilstücks 3 angeordnet. Das Funktionsrohr 10 ist somit gegen eine Verschiebung in Funktionsrohrlängsrichtung L_{F} gesichert.

Ferner weisen das erste Rohrleitungsteilstück 2 und das zweite Rohrleitungsteilstück 3 vorliegend einen Spalt 8 von 1 mm auf. In anderen Worten sind eine Stirnfläche des ersten Rohrleitungsteilstücks 2 und eine Stirnfläche des zweiten Rohrleitungsteilstücks 3 um 1 mm voneinander beabstandet. Somit ist das Funktionsrohr 10 zumindest bereichsweise in das erste Rohrleitungsteilstück 2 und das zweite Rohrleitungsteilstück 3 eingesetzt. Allerdings können die Stirnflächen des ersten Rohrleitungsteilstücks 2 und des zweiten Rohrleitungsteilstücks 3 auch aneinander anliegen, sodass ein Spalt 8 nicht sichtbar ist bzw. 0 mm beträgt.

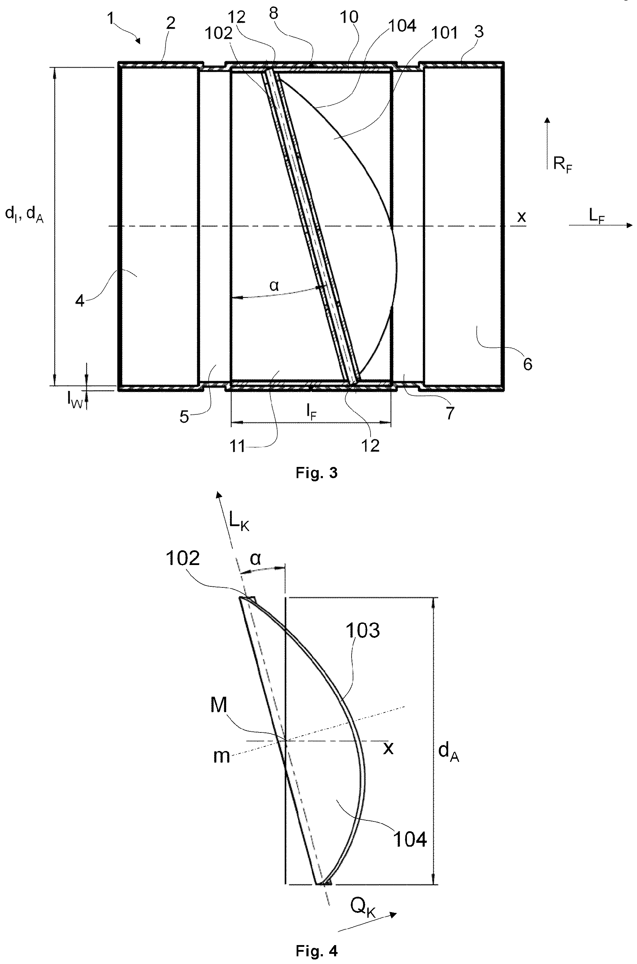

Zudem ist insbesondere aus Figur 3 zu entnehmen, dass eine Außenfläche des Funktionsrohres 10, d.h., eine äußere Mantelfläche, an der ersten Mantelinnenfläche 4 des ersten Rohrleitungsteilstücks 2 und an der zweiten Mantelinnenfläche 6 des zweiten Rohrleitungsteilstücks 3 anliegt. Hierbei entspricht ein Innendurchmesser d_{I} des ersten Rohrleitungsteilstücks 2 bzw. des zweiten Rohrleitungsteilstücks 3, wie dargestellt, im Idealfall einem Außendurchmesser d_{A} des Funktionsrohres 10. Mit anderen Worten gilt vorliegend d_{I} ≈ d_{A}, weshalb die in Figur 3 gezeigte Maßlinie mit beiden Bezugszeichen gekennzeichnet wurde.

In einer Ausführungsform beträgt der Innendurchmesser d_{I} zwischen 75 mm und 400 mm. Aufgrund der hohen Passgenauigkeit und der entsprechenden Anlageflächen sowie dadurch, dass der Spalt 8 durch die Außenfläche des Funktionsrohres 10 verdeckt ist, kann eine Leckage über den Spalt 8 vermieden werden.

Des Weiteren weist das in das erste Rohrleitungsteilstück 2 und das zweite Rohrleitungsteilstück 3 eingesetzte Funktionsrohr 10 eine Rohrinnenfläche 11 auf. Die Rohrinnenfläche 11 ist mit zwei gegenüberliegend angeordneten und in Funktionsrohrlängsrichtung L_{F} versetzt angeordneten Aufnahmemitteln 12 versehen. Mit anderen Worten würden die Aufnahmemittel 12 einander gegenüberliegen und wären in einer Radialrichtung R_{F} im Wesentlichen durch einen Innendurchmesser des Funktionsrohres 10 beabstandet, wenn die Aufnahmemittel 12 nicht in Funktionsrohrlängsrichtung L_{F} versetzt angeordnet wären. Die Aufnahmemittel 12 können in die Rohrinnenfläche 11 des Funktionsrohres 10 in Form von Ausnehmungen, bspw. als Bohrungen, eingebracht sein.

Das in den Figuren 2 und 3 dargestellte Funktionsrohr 10 hat überdies eine Länge I_{F}, gemessen entlang der Funktionsrohrlängsrichtung L_{F}. Vorliegend weist die Länge I_{F} des Funktionsrohres 10 zu dem Außendurchmesser d_{A} des Funktionsrohres 10 ein Verhältnis von 0.5 zu 1 auf. Folglich entspricht die Länge I_{F} des Funktionsrohres 10 einem Außenradius des Funktionsrohres 10.

Wie aus der Schnittansicht der Figuren 2 und 3 ersichtlich, ist eine ebenfalls nur in einer Schnittdarstellung dargestellte selbsttätige Rückschlagklappe 100 in dem Funktionsrohr 10 angeordnet. Genauer gesagt werden Klappenblätter 101 der selbsttätigen Rückschlagklappe 100 über eine Rotationsachse 102 in dem Funktionsrohr 10 gehalten. Hierzu ist die Rotationsachse 102 in die Aufnahmemittel 12 eingesetzt und wird hier formschlüssig gehalten. Die Rotationsachse 102 ist dabei vorliegend gegenüber der Radialrichtung R_{F} des Funktionsrohres 10 um einen Neigungswinkel α ausgelenkt.

Der Neigungswinkel α beträgt vorliegend 15°, könnte jedoch auch etwas größer oder etwas kleiner gewählt werden und liegt vorzugsweise zwischen 8° und 20°. Der vergleichsweise geringe Neigungswinkel α reduziert den Platzbedarf für die selbsttätige Rückschlagklappe 100 in dem Funktionsrohr 10, was durch das zuvor beschriebene Verhältnis von Länge I_{F} des Funktionsrohres 10 zu dem Außendurchmesser d_{A} des Funktionsrohres 10 ausgedrückt wird.

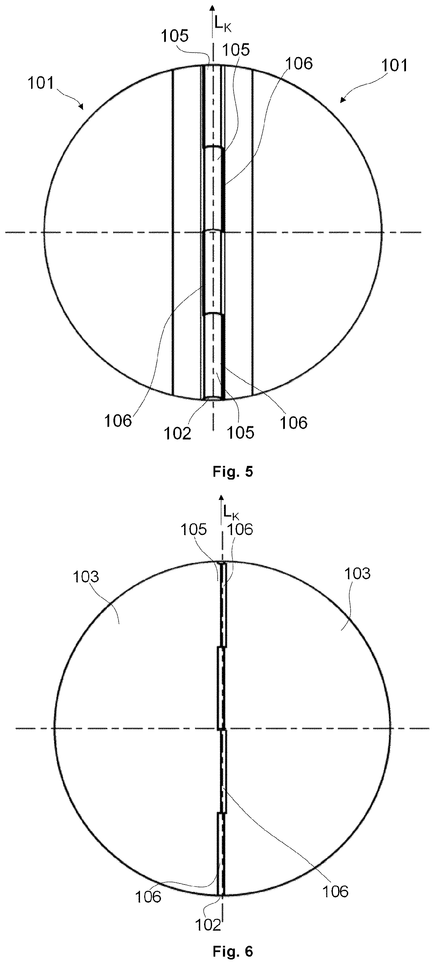

Trotzdem genügt der geringe Neigungswinkel α, um eine Rückstellung der Klappenblätter 101 allein durch ihr Eigengewicht zu ermöglichen. In der in den Figuren 1 bis 3 dargestellten Stellung der Klappenblätter 101 der Rückschlagklappe 100 ist diese geschlossen. Das heißt, dass das gezeigte Klappenblatt 101 an der Rohrinnenfläche 11 des Funktionsrohres 10 zumindest bereichsweise anliegt. Das Klappenblatt 101 weist dabei eine konvexe Form auf. In anderen Worten weist das Klappenblatt 101 eine zumindest bereichsweise konvex gekrümmte Anströmungsfläche 103 auf. Die Anströmungsfläche 103 definiert dabei eine Fläche des Klappenblatts 101, die in einer geschlossenen Stellung der Rückschlagklappe 100 auf einer dem Fluidstrom zugewandten Seite des Klappenblatts 101 angeordnet ist. In Figur 3 würde ein möglicher Fluidstrom vorzugsweise aus negativer Funktionsrohrlängsrichtung -L_{F} kommen. Folglich ist eine Anströmungsfläche 103 des Klappenblatts 100 in Figur 3 verdeckt und nicht sichtbar. Die Anströmungsfläche 103 wird allerdings in den Figuren 4 und 6 gezeigt.

Ferner weist das Klappenblatt 100 eine Innenkante auf, die in Richtung der Rotationsachse 102 weist, und eine Außenkante 104, welche zumindest bereichsweise hin zu der Rohrinnenfläche 11 des Funktionsrohres 10 weist. Unter Berücksichtigung einer Längsachse x der Rohrleitung 1, die eine Symmetrieachse darstellt, zu der die ersten und zweiten Rohrleitungsteilstücke 2 und 3 sowie das Funktionsrohr 10 abgesehen von den Aufnahmemitteln 12 rotationssymmetrisch sind, ist das Klappenblatt 101 in einem Bereich oberhalb der Längsachse x ellipsenförmig ausgestaltet. In einem Bereich unterhalb der Längsachse x ist das Klappenblatt 101 oval ausgestaltet. Ein Masseschwerpunkt des Klappenblatts 101 befindet sich aufgrund der Klappenblattgeometrie in einem Bereich unterhalb der Längsachse x. Ferner ändert sich ein Krümmungsradius der Außenkante 104 des Klappenblatts 101 entlang einer Erstreckung der Außenkante 104, d.h. von einem ersten Punkt, an dem die Außenkante 104 auf die Innenkante trifft, hin zu einem zweiten Punkt, an dem die Außenkante 104 auf die Innenkante trifft.

Wie aus Figur 4 ersichtlich, bildet ein Schnittpunkt der Längsachse x mit der Rotationsachse 102 einen Mittelpunkt M in Bezug auf eine maximale Längserstreckung des Klappenblatts 101 in Längsrichtung L_{K}. Eine Mittelachse m, die in eine Querrichtung Q_{K} des Klappenblatts 101 orientiert ist und durch den Mittelpunkt M verläuft, definiert dabei eine Mitte des Klappenblatts 101. Der Massenschwerpunkt des Klappenblatts 101, der vorliegend nicht gekennzeichnet ist, liegt dabei in Bezug auf die Mittelachse m, in Längsrichtung L_{K} verschoben. Im Detail ist der Massenschwerpunkt vorliegend in negative Längsrichtung L_{K} von der Mittelachse m verschoben.

Ferner wird in Figur 4 die Anströmungsfläche 103 des Klappenblatts 101 gezeigt, d.h., die Fläche, auf die ein Fluidstrom trifft, um das Klappenblatt 101 von der geschlossenen Stellung in die geöffnete Stellung um die Rotationsachse 102 zu verschwenken. Die Klappenblätter 101 sind hierzu, wie in den Teilansichten in den Figuren 5 bis 7 gezeigt, über Befestigungselemente 105 an der Rotationsachse 102 angeordnet. Zusammen mit der Rotationsachse 102 bilden die Befestigungselemente 105 der Klappenblätter 101 ein Scharnier. Vorliegend sind die Befestigungselemente 105 der Klappenblätter 101 entlang der Rotationsachse 102 dabei versetzt bzw. im Wechsel angeordnet.

Damit die Klappenblätter 101 beim Öffnen nicht umschlagen, sich verhaken oder gegeneinander schlagen, kann ferner ein hier nicht dargestelltes Blockierelement verwendet werden, welches auf einer Rohrinnenfläche 11 des Funktionsrohres 10 oder auf einer Mantelinnenfläche 4 oder 6 befestigt wird. Dabei wird das Blockierelement in positiver Funktionsrohrlängsrichtung L_{F} zu einem der Aufnahmemittel 12 versetzt angeordnet. Beispielsweise könnte das Blockierelement hierzu auf die Rohrinnenfläche 11 des in Figur 3 gezeigten Funktionsrohres 10 in Funktionsrohrlängsrichtung L_{F} zu dem unteren Aufnahmemittel 12 versetzt und im Bereich des zweiten Rohrleitungsteilstücks 3 angeordnet werden. Das Blockierelement könnte hierbei beispielsweise als Schaumstoffblock ausgestaltet sein und aufgeklebt werden.

In einer geschlossenen Stellung der selbsttätigen Rückschlagklappe 100, wie sie in den Figuren 5 bis 7 dargestellt ist, sind Schlitzöffnungen 106 entlang der Rotationsachse 102 ausgebildet, durch die ein Fluidstrom hindurchtreten kann. Wie in Figur 6 zu sehen, sind die Schlitzöffnungen 106 allerdings gegenüber den Anströmungsflächen 103 verhältnismäßig klein, sodass nur ein geringer Fluidstrom durch diese hindurchtreten kann. Folglich wird ein Fluidrückstrom bei einer geschlossenen selbsttätigen Rückstellklappe 100 weitestgehend blockiert. Somit bildet das durch die Befestigungselemente 105 und die Rotationsachse 102 gebildete Scharnier ein weitgehend dichtes Gelenk, welches einen Fluidrückstrom zumindest weitestgehend blockiert und auch einen auf die Anströmungsflächen 103 treffenden Fluidstrom auf diese einwirken lässt, sodass sich die Klappenblätter 101 öffnen.

Für die Montage der selbsttätigen Rückschlagklappe 100 ist folglich lediglich die Rotationsachse 102 durch die Befestigungselemente 105 zu führen. Ferner kann die Rotationsachse 102 anschließend in Aufnahmemittel 12 eines Funktionsrohres 10 eingesetzt werden. Bei einer Orientierung des Funktionsrohres 10, d.h., der Längsachse x, im Wesentlichen horizontal, d.h., senkrecht zur Schwerkraftrichtung, schließen sich die Klappenblätter 101 durch ihr Eigengewicht ohne die Benötigung eines Betätigungselements. Die Überführung der selbsttätigen Rückschlagklappe 100 in eine geöffnete Stellung kann anschließend durch einen Fluidstrom, der auf die Anströmungsflächen 103 der Klappenblätter 101 trifft, hervorgerufen werden. Bei dem Fluidstrom kann es sich beispielsweise um einen Abluftstrom oder einen Zuluftstrom einer Anlage der chemischen Industrie handeln.

Sämtliche Elemente der Rohrleitung 1, d.h., insbesondere das erste Rohrleitungsteilstück 2, das zweite Rohrleitungsteilstück 3, das Funktionsrohr 10, die Klappenblätter 101 und die Rotationsachse 102, können dabei spritzgeformt werden und beispielsweise aus einem Kunststoff, vorzugsweise aus PVC, PVC-UV, PP, PE, PVDF, PPs oder PPs-el, ausgebildet sein. Eine Wandstärke I_{w} der Rohrleitungsteilstücke 2 und 3 beträgt dabei vorzugsweise nur wenige Millimeter, sodass ein Gewicht der Rohrleitung 1 und der einzelnen Elemente gering gehalten werden kann.

Beispielsweise weist die vorliegend in Figur 3 dargestellte Rohrleitung 1 nur ein Gewicht von weniger als 750 g auf, wobei die Rohrleitung 1 einen Innendurchmesser d_{I} von 200 mm, eine Wandstärke I_{w} von 3 mm, einen Spalt 8 von 1 mm und ein Funktionsrohr 10 mit einer Länge I_{F} von 100 mm aufweist, und wobei sämtliche Komponenten aus PPs ausgebildet sind.

Folglich wird durch die vorliegende Erfindung eine selbsttätige Rückschlagklappe 100 bereitgestellt, die insbesondere in einer horizontalen Rohrleitung 1 werkzeuglos verbaut werden kann, und wobei kein Betätigungselement für die Rückstellung oder Öffnung erforderlich ist. Die vorliegende Erfindung erlaubt somit eine einfache und kostengünstige Montage und Fertigung und ist gleichzeitig wartungswarm und anwenderfreundlich. Aufgrund des geringen Gewichts der Teilkomponenten, insbesondere der Klappenblätter 101, und dem geringen Neigungswinkel α wird zudem eine selbsttätige Rückschlagklappe 100 geschaffen, die bereits bei geringen Fluidströmen öffnet. Ferner erfordern die selbsttätige Rückschlagklappe 100 und das Funktionsrohr 10 nur einen geringen Einbauraum. Darüber hinaus wird durch die Form der Klappenblätter 101 der Fluidstrom nur minimal beeinflusst.

### Bezugszeichenliste

- 1: Rohrleitung
- 2: erstes Rohrleitungsteilstück
- 3: zweites Rohrleitungsteilstück
- 4: erste Mantelinnenfläche
- 5: erster Vorsprung
- 6: zweite Mantelinnenfläche
- 7: zweiter Vorsprung
- 8: Spalt

- 10: Funktionsrohr
- 11: Rohrinnenfläche
- 12: Aufnahmemittel

- 100: selbsttätige Rückschlagklappe
- 101: Klappenblatt
- 102: Rotationsachse
- 103: Anströmungsfläche
- 104: Außenkante (Klappenblatt)
- 105: Befestigungselement
- 106: Schlitzöffnung

- α: Winkel
- d_{I}: Innendurchmesser (Rohrleitungsteilstück)
- d_{A}: Außendurchmesser (Funktionsrohr)
- I_{F}: Länge (Funktionsrohr)
- m: Mittelachse
- x: Längsachse
- I_{W}: Wandstärke
- M: Mittelpunkt
- Q_{K}: Querrichtung (Klappenblatt)
- L_{F}: Funktionsrohrlängsrichtung
- L_{K}: Längsrichtung (Klappenblatt)
- R_{F}: Radialrichtung (Funktionsrohr)

## Patentansprüche

1. Selbsttätige Rückschlagklappe (100) für die Verwendung in einer horizontalen Rohrleitung (1), wobei die selbsttätige Rückschlagklappe (100) zwei Klappenblätter (101) aufweist, die sich jeweils in eine Längsrichtung (L_{K}) und eine Querrichtung (Q_{K}) erstrecken und dazu eingerichtet sind, um eine gemeinsame Rotationsachse (102) verschwenkt zu werden, **dadurch gekennzeichnet, dass** ein jedes Klappenblatt (101) einen Masseschwerpunkt aufweist, der in Längsrichtung (L_{K}) von einer Mittelachse (m), die durch einen Mittelpunkt (M) einer maximalen Längserstreckung senkrecht zur Längsrichtung (L_{K}) verläuft, verschoben angeordnet ist.

2. Selbsttätige Rückschlagklappe (100) nach Anspruch 1, **dadurch gekennzeichnet, dass** ein jedes Klappenblatt (101) der selbsttätigen Rückschlagklappe (100) eine zumindest bereichsweise konvex gekrümmte Anströmungsfläche (103) aufweist.

3. Selbsttätige Rückschlagklappe (100) nach Anspruch 2, **dadurch gekennzeichnet, dass** die Klappenblätter (101) dazu eingerichtet sind, durch eine auf die Anströmungsflächen (103) wirkende Fluidströmung von einer geschlossenen Stellung in eine geöffnete Stellung überführt zu werden, und wobei die Klappenblätter (101) dazu eingerichtet sind, aufgrund der Schwerkraft in der geschlossenen Stellung zu verharren, wenn keine Fluidströmung vorhanden ist.

4. Selbsttätige Rückschlagklappe (100) nach einem der vorhergehenden Ansprüche, **dadurch gekennzeichnet, dass** ein jedes Klappenblatt (101) der selbsttätigen Rückschlagklappe (100) eine Innenkante und eine Außenkante (104) aufweist, wobei die Innenkante dazu eingerichtet ist, hin zu einer Rotationsachse (102) zu weisen, wobei die Außenkante (104) dazu eingerichtet ist, in einer geschlossenen Stellung der selbsttätigen Rückschlagklappe (100) zumindest bereichsweise hin zu einer Rohrinnenfläche (11) zu weisen, und wobei die Außenkante (104) bereichsweise ellipsenförmig und bereichsweise kreisförmig ausgestaltet ist.

5. Selbsttätige Rückschlagklappe (100) nach einem der vorhergehenden Ansprüche, **dadurch gekennzeichnet, dass** die Klappenblätter (101) aus einem Kunststoff, vorzugsweise aus PVC, PVC-UV, PP, PE, PVDF, PPs oder PPs-el, ausgebildet sind.

6. Selbsttätige Rückschlagklappe (100) nach einem der vorhergehenden Ansprüche, **dadurch gekennzeichnet, dass** die Klappenblätter (101) der selbsttätigen Rückschlagklappe (100) jeweils Befestigungselemente (105) aufweisen, die dazu eingerichtet sind, gemeinsam mit der Rotationsachse (102) ein Scharnier zu bilden.

7. Funktionsrohr (10) aufweisend wenigstens eine Rotationsachse (102) und wenigstens eine selbsttätige Rückschlagklappe (100) nach einem der Ansprüche 1 bis 6, wobei das Funktionsrohr (10) sich entlang einer Funktionsrohrlängsrichtung (L_{F}) erstreckt, **dadurch gekennzeichnet, dass** das Funktionsrohr (10) wenigstens zwei an einer Rohrinnenfläche (11) des Funktionsrohres (10) gegenüberliegend und in Funktionsrohrlängsrichtung (L_{F}) versetzt angeordnete Aufnahmemittel (12) aufweist, und wobei die Rotationsachse (102) in den Aufnahmemitteln (12) formschlüssig gehalten wird.

8. Funktionsrohr (10) nach Anspruch 7, **dadurch gekennzeichnet, dass** die Rotationsachse (102) gegenüber einer Radialrichtung (R_{F}) des Funktionsrohres (10) um einen Neigungswinkel (α) von zwischen 8° und 20°, vorzugsweise um einen Neigungswinkel (α) von 15°, geneigt ist.

9. Funktionsrohr (10) nach Anspruch 7 oder 8, **dadurch gekennzeichnet, dass** sich, wenn die Funktionsrohrlängsrichtung (L_{F}) einen Winkel zwischen 82° und 98°, vorzugsweise einen Winkel von 90°, mit der Schwerkraftrichtung bildet und keine Fluidströmung in das Funktionsrohr (10) strömt, die selbsttätige Rückschlagklappe (100) in einer geschlossenen Stellung befindet.

10. Funktionsrohr (10) nach einem der Ansprüche 7 bis 9, **dadurch gekennzeichnet, dass** das Funktionsrohr (10) an der Rohrinnenfläche (11) ein in Funktionsrohrlängsrichtung (L_{F}) zu einem der Aufnahmemittel (12) versetzt angeordnetes Blockierelement aufweist, und wobei das Blockierelement eine maximale Öffnung der Klappenblätter (101) der selbsttätigen Rückschlagklappe (100) begrenzt.

11. Funktionsrohr (10) nach einem der Ansprüche 7 bis 10, **dadurch gekennzeichnet, dass** das Funktionsrohr (10) dazu eingerichtet ist, in eine Rohrleitung (1) mit einem Innendurchmesser (d_{I}) von zwischen 75 mm und 400 mm, vorzugsweise in eine Rohrleitung (1) mit einem Innendurchmesser (d_{I}) von 110 mm, 160 mm, 220 mm, 250 mm, 315 mm oder 355 mm, eingesetzt zu werden.

12. Funktionsrohr (10) nach einem der Ansprüche 7 bis 11, **dadurch gekennzeichnet, dass** eine Länge (I_{F}) des Funktionsrohres (10) zu einem Außendurchmesser (d_{A}) des Funktionsrohres (10) ein Verhältnis von zwischen 0.3 zu 1 und 0.5 zu 1, vorzugsweise ein Verhältnis von 0.5 zu 1, aufweist.

13. Rohrleitung (1), insbesondere für die chemische Industrie, aufweisend ein erstes Rohrleitungsteilstück (2), ein zweites Rohrleitungsteilstück (3) und ein Funktionsrohr (10) nach einem der Ansprüche 7 bis 12, **dadurch gekennzeichnet, dass** das Funktionsrohr (10) zumindest bereichsweise in das erste Rohrleitungsteilstück (2) und das zweite Rohrleitungsteilstück (3) eingesetzt ist, und wobei eine Außenfläche des Funktionsrohres (10) an einer ersten Mantelinnenfläche (4) des ersten Rohrleitungsteilstücks (2) und an einer zweiten Mantelinnenfläche (6) des zweiten Rohrleitungsteilstücks (2) anliegt.

14. Rohrleitung (1) nach Anspruch 13, **dadurch gekennzeichnet, dass** das erste Rohrleitungsteilstück (2) einen an der ersten Mantelinnenfläche (4) angeordneten ersten Vorsprung (5) aufweist, wobei das zweite Rohrleitungsteilstück (3) einen an der zweiten Mantelinnenfläche (6) angeordneten zweiten Vorsprung (7) aufweist, und wobei das Funktionsrohr (10) durch den ersten Vorsprung (5) und den zweiten Vorsprung (6) an einer Längsverschiebung innerhalb der Rohrleitungsteilstücke (2, 3) in Funktionsrohrlängsrichtung (L_{F}) gehindert ist.

15. Rohrleitung (1) nach Anspruch 12 oder 13, **dadurch gekennzeichnet, dass** das erste Rohrleitungsteilstück (2), das zweite Rohrleitungsteilstück (3), das Funktionsrohr (10), die Rotationsachse (102) und die selbsttätige Rückschlagklappe (100) spritzgeformt sind.
